# FASCICULE DE BREVET EUROPEEN

(11) **EP 2 798 314 B1**
(45) Date de publication et mention de la délivrance du brevet: **20.09.2017**
(21) Numéro de dépôt: 12809289.7
(22) Date de dépôt: 28.12.2012
(51) Int. Cl.: F16M 11/08, F16M 11/12, G03B 15/00, B23Q 1/54, G01C 21/18

(54) **PLATEFORME STABILISÉE**
STABILISIERTE PLATTFORM
STABILISED PLATFORM

(30) Priorité: 30.12.2011 FR 1104159; 23.02.2012 FR 1200533
(43) Date de publication de la demande: 05.11.2014
(73) Titulaire: THALES, 92200 Neuilly-sur-Seine (FR)
(72) Inventeur: RUDIER, Raymond, F-78995 Elancourt cedex (FR)
(74) Mandataire: Lavoix
(86) Numéro de dépôt international: PCT/EP2012/077042
(87) Numéro de publication internationale: WO 2013/098386

(56) Documents cités:
- EP-A1- 2 175 520
- FR-A1- 2 551 920
- JP-A- 5 108 159
- US-A- 3 616 699
- US-A- 5 383 645
- US-A- 5 797 054
- US-A1- 2010 101 341

## Description

La présente invention concerne une plateforme stabilisée comprenant :
- un cadre de support ;
- une structure porteuse, montée rotative par rapport au cadre de support autour d'un axe de rotation principal.
- une structure portée, montée rotative par rapport à la structure porteuse autour d'un axe de rotation secondaire sensiblement perpendiculaire à l'axe de rotation principal.

De telles plateformes stabilisées sont notamment prévues sur des aéronefs, des véhicules terrestres ou des navires. Elles portent une charge utile comprenant des appareillages, notamment des équipements optroniques, tels que des caméras.

Il est possible de prévoir une plateforme stabilisée, dans laquelle la structure porteuse est guidée en rotation par deux paliers fixés au cadre de support espacés l'un de l'autre selon la direction de l'axe de rotation principal, la charge utile étant fixée dans une structure portée intégrée à la structure porteuse et agencée entre deux autres paliers espacés entre eux selon la direction de l'axe de rotation secondaire. La structure porteuse englobe la structure portée.

Une telle plateforme présente cependant plusieurs inconvénients. En particulier, la forme englobante de la structure porteuse nuit à sa rigidité et complique la mise en place de la charge utile dans la structure portée, ainsi que l'accès à cette charge utile. En outre, la nécessité d'un alignement parfait des deux paliers de guidage de la structure portée et des deux paliers de la structure porteuse requiert des usinages précis.

Une telle plateforme stabilisée est décrite par exemple dans le document US 5 797 054 A.

Un but de l'invention est de proposer une plateforme stabilisée robuste, de structure simple et permettant un accès facilité à la charge utile.

A cet effet, l'invention a pour objet une plateforme stabilisée du type précité, caractérisée en ce que la structure portée comprend au moins un support destiné à recevoir une charge, le ou chaque support étant guidé en rotation par un palier central disposé d'un seul côté du support selon l'axe de rotation secondaire, la structure portée comprenant un tourillon central monté rotatif dans le palier central, le ou chaque support étant disposé à une extrémité respective du tourillon central selon la direction de l'axe de rotation secondaire, la structure porteuse comprenant un anneau central logeant le palier central et des premier et deuxième tourillons d'extrémité encadrant l'anneau central selon la direction de l'axe de rotation principal le cadre de support comprenant un premier et un deuxième palier, le premier tourillon d'extrémité et le deuxième tourillon d'extrémité étant montés rotatifs respectivement dans le premier et le deuxième palier, la plateforme stabilisée comprenant en outre un premier ensemble d'entraînement, propre à entraîner en rotation la structure portée, lequel premier ensemble d'entraînement comprend un premier moteur électrique, le premier ensemble d'entraînement étant logé dans l'anneau central, le premier moteur électrique comprenant un stator et un rotor, le stator étant monté fixe par rapport à la structure porteuse et entourant circonférentiellement le rotor, le rotor étant solidaire du tourillon central de la structure portée , qu'il entraîne en rotation.

La plateforme stabilisée selon l'invention peut également comprendre l'une ou plusieurs des caractéristiques des revendications dépendantes, prise(s) isolément ou selon toute(s) combinaison(s) techniquement possible(s).

L'invention sera mieux comprise à la lecture de la description qui va suivre, donnée uniquement à titre d'exemple, et faite en se référant aux dessins annexés, sur lesquels :
- la Figure 1 est une vue en perspective d'une partie d'une plateforme stabilisée selon un premier mode de réalisation ;
- la Figure 2 est une vue schématique en section de la plateforme stabilisée selon le premier mode de réalisation,
- la Figure 3 est une vue schématique de l'agencement des paliers de guidage en rotation de la plateforme stabilisée de la Figure 2;
- la Figure 4 est une vue schématique en section d'une plateforme stabilisée selon un deuxième mode de réalisation.
- la Figure 5 est une vue schématique de l'agencement des paliers de guidage en rotation de la plateforme stabilisée de la Figure 4.

La plateforme stabilisée selon l'invention est par exemple destinée à être montée sur le châssis d'un engin mobile, tel qu'un aéronef, un navire ou un véhicule terrestre.

Par plateforme stabilisée, on entend un dispositif destiné à recevoir une charge utile, qui est asservi de manière à l'orienter précisément quels que soient les mouvements et l'environnement extérieur de l'engin sur lequel elle est montée.

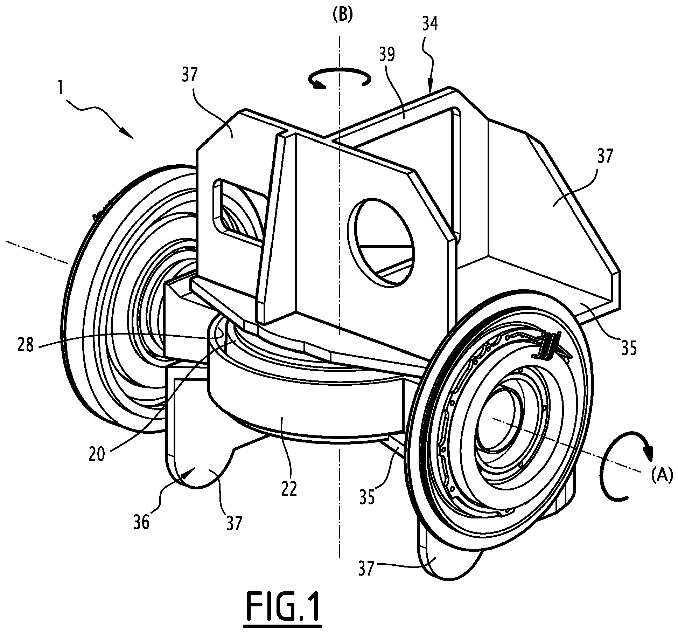

La Figure 1 illustre une plateforme stabilisée 1 selon un premier mode de réalisation de l'invention. Elle comprend un cadre de support 5, destiné à être solidarisé à l'engin mobile. Une structure porteuse 7 est montée mobile en rotation par rapport au cadre de support 5 autour d'un axe de rotation principal A. Une structure portée 10 est montée mobile en rotation par rapport à la structure porteuse 7 autour d'un axe de rotation secondaire B. L'axe de rotation principal A est perpendiculaire à l'axe de rotation secondaire B. Les structures porteuse et portée 7, 10 forment ainsi conjointement un ensemble de type cardan à deux axes.

Lorsque la plateforme stabilisée 1 est montée sur l'engin mobile avec l'axe de rotation secondaire B vertical, la rotation autour de l'axe de rotation principal A correspond à un mouvement en élévation, tandis que la rotation autour de l'axe de rotation secondaire B correspond à un mouvement circulaire.

Le cadre de support 5 comprend un premier et un deuxième palier 12, 14 propres à assurer le guidage en rotation de la structure porteuse 7 par rapport au cadre de support 5. Plus précisément, les premier et deuxième paliers 12, 14 sont espacés l'un de l'autre selon la direction de l'axe de rotation principal A. Dans l'exemple représenté, ce sont des paliers à roulements à billes. Ils comprennent chacun deux roulements à billes adjacents

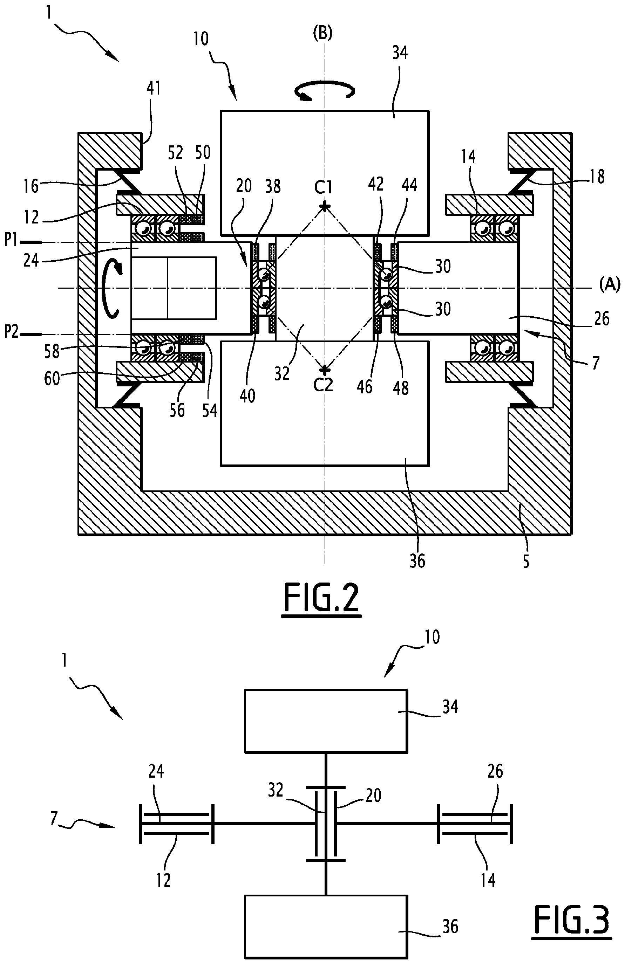

Les premier et deuxième paliers 12, 14 sont montés sur le cadre de support 5 par l'intermédiaire d'un système de suspension. Celui-ci comprend un premier et un deuxième anneau de suspension 16, 18 représentés schématiquement sur la Figure 2. Les premier et deuxième anneaux de suspension 16, 18 sont respectivement interposés entre le cadre de support 5 et les premier et deuxième paliers 12, 14. Ils présentent chacun une forme sensiblement annulaire axée sur l'axe de rotation principal A. Le premier anneau de suspension 16 entoure circonférentiellement le premier palier 12. Le deuxième anneau de suspension 18 entoure circonférentiellement le deuxième palier 14.

La structure porteuse 7 s'étend sensiblement selon une direction d'allongement confondue avec la direction de l'axe de rotation principal A. Elle comprend un palier central 20, propre à guider en rotation la structure portée 10 autour de l'axe de rotation secondaire B. Dans le premier mode de réalisation, le palier central 20 est disposé dans le plan contenant l'axe de rotation principal A. La structure porteuse 7 présente sensiblement la forme d'une poutre.

Plus précisément, la structure porteuse 7 comprend un anneau central 22 (figure 1) et des premier et deuxième tourillons d'extrémité 24, 26 (figure 2) s'étendant de part et d'autre de l'anneau central 22 selon la direction de l'axe de rotation principal A.

Plus particulièrement, la structure porteuse 7 s'étend, selon la direction de l'axe de rotation secondaire B, entre un premier plan P₁ et un deuxième plan P₂ normaux à l'axe de rotation secondaire B, et espacés selon la direction de l'axe de rotation secondaire B.

Selon la direction de l'axe de rotation secondaire B, les tourillons d'extrémité 24, 26 s'étendent sensiblement entre le premier plan P1 et le deuxième plan P2. L'anneau central 22 s'étend également entre les plans P1 et P2.

Les premier et deuxième tourillons d'extrémité 24, 26 sont montés rotatifs respectivement dans les premier et deuxième paliers 12, 14. Ainsi, la structure porteuse 7 est guidée en rotation autour de l'axe de rotation principal A par les premier et deuxième paliers 12, 14 du cadre de support 5.

L'anneau central 22 délimite un orifice central 28 traversant centré sur l'axe de rotation secondaire B. Dans l'exemple représenté, l'anneau central 22 présente une forme sensiblement annulaire centrée sur l'axe de rotation secondaire B.

Le palier central 20 est logé dans l'anneau central 22. Il s'étend dans un plan contenant l'axe de rotation principal A. Dans l'exemple représenté, le palier central 20 est un palier à roulements à billes. Il comprend une paire de roulements 30 coaxiaux accolés. Les roulements 30 sont en particulier des roulements à billes à contact oblique. Chaque roulement 30 comprend une bague extérieure, solidaire de la structure porteuse 7 et une bague intérieure, solidaire de la structure portée 10, les bagues intérieure et extérieure délimitant entre elles un chemin de roulement sur lequel roulent les billes du roulement 30

Dans le premier mode de réalisation, les deux roulements 30 de la paire de roulements sont agencés de part et d'autre de l'axe de rotation principal A selon la direction de l'axe de rotation secondaire B. Ils sont symétriques par rapport à un plan contenant l'axe de rotation principal A, en particulier par rapport au plan normal à l'axe de rotation secondaire B. Les points d'intersection C1, C2 des lignes de force des roulements 30 se situent sur l'axe de rotation secondaire B. Ils sont symétriques par rapport à l'axe de rotation principal A. Les roulements 30 de la paire de roulements sont choisis de telle manière que le point d'intersection C1, C2 des lignes de force de chaque roulement 30 soit le plus éloigné possible de l'axe de rotation principal A selon la direction de l'axe de rotation secondaire B du même côté de l'axe de rotation principal A que le roulement 30 considéré. Les points d'intersection C1 et C2 sont représentés schématiquement sur la figure 2.

La rigidité en basculement du palier central 20 est ajustée au besoin de rigidité de l'ensemble. Elle est d'autant plus élevée que la distance entre les points d'intersection C1 et C2 (figure 2) des lignes de force des roulements 30 est élevée et que le diamètre du palier central 20 est important.

La structure portée 10 s'étend sensiblement selon une direction d'allongement confondue avec la direction de l'axe de rotation secondaire B.

Dans le premier mode de réalisation (figures 1 à 3), la structure portée 10 comprend un tourillon central 32 et deux supports 34, 36.

Le tourillon central 32 s'étend sensiblement selon la direction de l'axe de rotation secondaire B, perpendiculairement au plan moyen de la structure porteuse 7. Les supports 34, 36 sont agencés de part et d'autre du tourillon central 32 selon la direction de l'axe de rotation secondaire B.

Les supports 34, 36 sont agencés de part et d'autre du palier central 20 selon la direction de l'axe de rotation secondaire B. Ils s'étendent, de préférence symétriquement, de part et d'autre de la structure porteuse 7 selon la direction de l'axe de rotation secondaire B. Les supports 34, 36 sont en saillie à l'extérieur de la structure porteuse 7. Les supports 34, 36 s'étendent chacun en dehors de l'espace délimité entre les premier et deuxième plans P₁, P₂. En particulier, ils s'étendent chacun entièrement en dehors de l'espace délimité entre ces premier et deuxième plans P₁, P₂.

La structure portée 10 est guidée en rotation autour de l'axe de rotation secondaire B par le palier central 20. Le tourillon central 32 est monté rotatif dans le palier central 20. Chaque support 34, 36 est guidé en rotation autour de l'axe de rotation secondaire B par le palier central 20, lequel est disposé d'un seul côté du support 34, 36 respectif.

La structure portée 10 est ainsi guidée en rotation par un palier central 20 unique. Comme décrit précédemment, ce palier central 20 unique comprend par exemple deux roulements coaxiaux adjacents 30, avantageusement accolés.

La masse en rotation autour de l'axe de rotation secondaire B, c'est-à-dire la masse totale de la structure portée 10, a son centre de gravité au plus près de l'axe de rotation secondaire B.

Les supports 34, 36 sont fixés à des extrémités opposées du tourillon central 32 selon la direction de l'axe de rotation secondaire B. Les supports 34, 36 sont en particulier fixés au tourillon central 32 de manière amovible, par exemple par l'intermédiaire d'une bride de fixation respective. Ainsi, chaque support 34, 36 est apte à être détaché du tourillon central 32 et à être remplacé par un autre support 34, 36 en fonction des besoins, et notamment en fonction de la nature de la charge utile.

Les supports 34, 36 sont destinés à recevoir une charge, en particulier une charge utile et/ou une masse. La charge utile comprend par exemple des capteurs optroniques, tels que des caméras thermique, infrarouge, proche infrarouge ou visible, des pointeurs lasers, des illuminateurs laser et/ou des télémètres laser. Elle comprend en outre un gyroscope ou centrale inertielle, propre à mesurer l'orientation de la plateforme stabilisée 1 dans un repère absolu. Selon un mode de réalisation, chaque support 34, 36 porte une charge utile. En variante, seul l'un des supports 34, 36 porte une charge utile, tandis que l'autre support 34, 36 reçoit une masse d'équilibrage.

Les supports 34, 36 présentent par exemple une forme de plateau comprenant des logements de réception de la charge utile. Ils s'étendent en regard de la structure porteuse 7 de part et d'autre de l'orifice central 28 de l'anneau central 26. La longueur des supports 34, 36 prise parallèlement à l'axe de rotation principal A est notamment supérieure au diamètre du tourillon central 32.

A titre d'exemple, on a illustré sur la figure 1 un support 36 comprenant une paroi de base 35 orientée vers la structure porteuse 7 et deux parois latérales 37 en saillie à l'écart de la structure porteuse 7 à partir de la paroi de base 35, et notamment sensiblement parallèles entre elles. Le support 36 est ouvert sur deux côtés latéraux, ainsi que de son côté opposé à la structure porteuse 7. La charge utile logée dans ce support 36 est ainsi accessible depuis le côté du support 36 opposé à la structure porteuse 7, ainsi que par deux côtés latéraux. Le support 34 illustré à titre d'exemple sur la figure 1 comporte également une paroi de base 35 et deux parois latérales 37. Les parois latérales 37 sont reliées entre elles par une paroi de rigidification 39 transversale s'étendant sur au moins une partie de leur hauteur prise selon la direction de l'axe de rotation secondaire B. En option, au moins une paroi latérale comprend un ou plusieurs logements de réception de la charge utile, notamment sous la forme d'orifices traversants adaptés aux interfaces des capteurs choisis pour l'application.

Selon un mode de réalisation, les supports 34, 36 sont identiques. En variante, ils présentent des formes différentes. La forme de chaque support 34, 36 est notamment fonction de la charge utile qu'il reçoit.

Chaque support 34, 36 est librement accessible par son côté opposé à la structure porteuse 7 selon la direction de l'axe de rotation secondaire B. En particulier, le cadre de support 5 comprend une ouverture 41 d'accès à la charge logée dans les supports 34, 36.

La plateforme stabilisée 1 comprend en outre un premier ensemble d'entraînement, propre à entraîner en rotation la structure portée 10. Le premier ensemble d'entraînement est représenté de manière schématique sur la Figure 2. Il est logé dans l'anneau central 22. Il comprend un premier moteur électrique 38, propre à entraîner en rotation la structure portée 10, un premier capteur de position angulaire 40 et un premier joint tournant électrique (non représenté), propre à assurer l'alimentation électrique de la charge utile reçue dans les supports 34, 36.

Dans l'exemple représenté sur la Figure 2, le premier moteur électrique 38 et le capteur de position angulaire 40 sont agencés dans l'anneau central 22 de part et d'autre du palier central 20 selon la direction de l'axe de rotation secondaire B.

Le premier moteur électrique 38 comprend, de manière classique, un rotor 42 et un stator 44. Il s'agit d'un moteur à rotor interne. En particulier, le premier moteur électrique 38 est un moteur plat, encore appelé moteur galette. Le rotor 42 est solidaire du tourillon central 32 de la structure portée 10, qu'il entraîne en rotation. Le stator 44 entoure circonférentiellement le rotor 42. Il est monté fixe par rapport à la structure porteuse 7.

Le premier capteur de position angulaire 40 est propre à mesurer la position angulaire du rotor 42 du premier moteur électrique 38. Dans l'exemple représenté sur la Figure 2, le premier capteur de position angulaire 40 est un résolveur. De manière classique, le résolveur comprend un rotor 46 muni d'un bobinage primaire et un stator 48 muni de deux bobinages secondaires. Le rotor 46 du résolveur est solidaire en rotation de l'arbre du premier moteur électrique 38. Le stator 46 du résolveur est fixe par rapport à la structure porteuse 7. Le bobinage primaire du rotor 46 du résolveur est alimenté avec une tension d'excitation. La rotation du rotor 46 par rapport au stator 48 induit dans les bobinages secondaires du stator 48 une tension dont la valeur dépend de la position angulaire du rotor 46 du résolveur et donc du rotor 42 du premier moteur électrique 38.

La plateforme stabilisée 1 comprend en outre un deuxième ensemble d'entraînement, propre à entraîner en rotation la structure porteuse 7. Le deuxième ensemble d'entraînement est représenté de manière schématique sur la Figure 2. Il est disposé au niveau de l'un de paliers 12, 14 du cadre de support 5. Il présente une structure analogue à celle du premier ensemble d'entraînement. En particulier, il comprend un deuxième moteur électrique 50, propre à entraîner en rotation la structure porteuse 7, un deuxième capteur de position angulaire 52 et un deuxième joint tournant électrique (non représenté), propre à assurer l'alimentation électrique du premier moteur électrique 38 et de la charge utile reçue dans les supports 34, 36. Dans l'exemple représenté sur la Figure 2, le deuxième moteur électrique 50 et le deuxième capteur de position angulaire 52 sont adjacents selon la direction de l'axe de rotation principal A.

Le deuxième moteur électrique 50 comprend un rotor 54 solidaire du premier tourillon d'extrémité 24 et un stator 56 monté fixe par rapport au cadre de support 5. Le deuxième capteur de position angulaire 52 comprend un rotor 58 et un stator 60 analogues à ceux du premier capteur de position angulaire 40. Le rotor 58 est solidaire en rotation de l'arbre du deuxième moteur électrique 50. Le stator 60 du résolveur est fixe par rapport au cadre de support 5.

La plateforme stabilisée 1 selon le premier mode de réalisation de l'invention présente les avantages suivants.

L'utilisation d'un palier unique 20 de guidage en rotation de la structure portée 10 simplifie la conception et la fabrication de la plateforme 1 en évitant d'avoir à aligner plusieurs paliers entre eux. En outre, la réduction du nombre de paliers contribue à la diminution de la masse totale de la plateforme stabilisée 1.

La forme de poutre de la structure porteuse 7 simplifie la fabrication de cette structure 7, ainsi que le montage de la plateforme 1. Elle améliore également la rigidité de la structure porteuse 7 réduisant ainsi les risques de déformation de la plateforme 1. En outre, elle augmente l'espace disponible pour la charge utile, celui-ci n'étant plus limité par les dimensions d'une structure porteuse 7 englobante.

A même charge utile transportée, la forme de poutre de la structure porteuse 7 engendre une diminution de la masse totale de la plateforme 1.

L'agencement de supports 34, 36 destinés à recevoir la charge utile de part et d'autre de la structure porteuse 7 facilite l'accès à la charge utile, notamment lors de son intégration dans les supports 34, 36 ou au cours d'opérations de maintenance. En outre, il permet de prévoir des supports 34, 36 amovibles interchangeables en fonction de la charge utile reçue. Cet agencement particulier des supports 34, 36 est notamment rendu possible par la forme de la structure porteuse 7, qui n'englobe plus la structure portée 10, et qui n'englobe donc notamment pas les supports 34, 36 pour la charge utile.

Le montage des premier et deuxième paliers 12, 14 sur le cadre de support 5 par l'intermédiaire du système de suspensions est avantageuse. En effet, le système de suspensions filtre les vibrations transmises par le cadre de support 5. La souplesse relative du système de suspension permet de garantir l'alignement des paliers 12 et 14 sans passer par des tolérances de réalisation coûteuses du cadre de support 5.

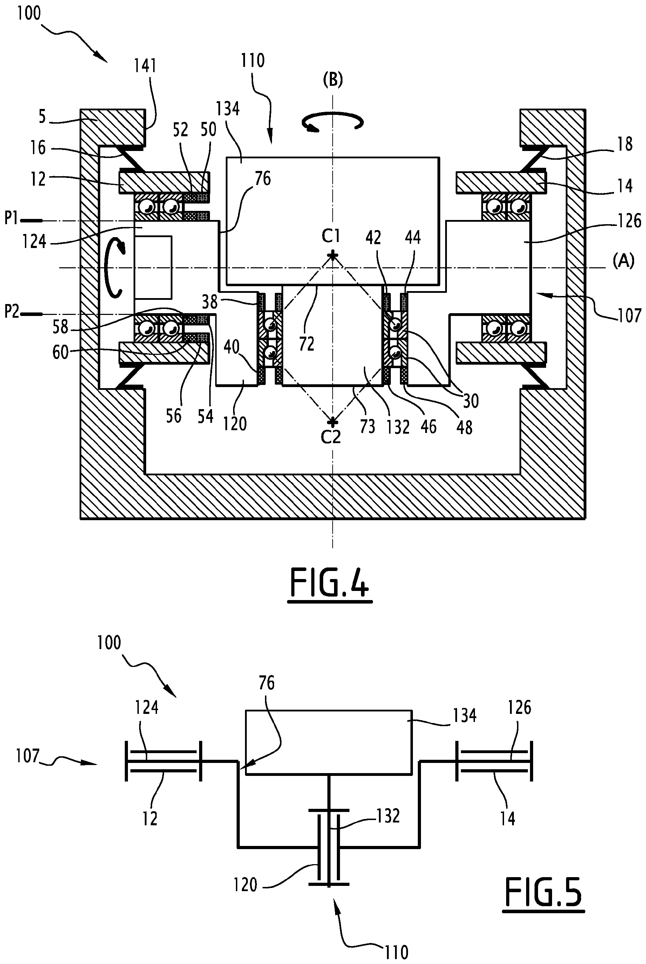

Une plateforme stabilisée 100 selon un deuxième mode de réalisation est illustrée sur les figures 4 et 5. Seules les différences par rapport à la plateforme stabilisée 1 selon le premier mode de réalisation seront décrites ci-après.

La plateforme stabilisée 100 selon le deuxième mode de réalisation diffère de celle selon le premier mode de réalisation en ce que la structure porteuse comprend uniquement un support 134, destiné à recevoir une charge. En outre, la structure porteuse 110 de la plateforme stabilisée 100 a une forme différente de celle de la plateforme stabilisée 1 selon le premier mode de réalisation.

Comme illustré sur les figures 4 et 5, la plateforme stabilisée 100 comprend une structure portée 110 comprenant un tourillon central 132 et un unique support 134. Le support 134 est fixé à une extrémité 72 du tourillon central 132 selon la direction de l'axe de rotation secondaire B. Une extrémité 73 du tourillon central 132 opposée à l'extrémité 72 est libre, c'est-à-dire qu'elle ne porte aucun support.

La structure portée 110 est guidée en rotation par un palier central 120 d'une structure porteuse 107. Le palier central 120 est disposé d'un seul côté du support 134 selon la direction de l'axe de rotation secondaire B (au-dessous du support 134 sur la figure 4). Le tourillon 132 est monté rotatif dans le palier central 120.

La structure portée 110 est ainsi guidée en rotation par un unique palier 120. Dans le mode de réalisation représenté (figure 4), et comme décrit en référence au premier mode de réalisation, le palier central 120 unique comprend deux roulements 30 adjacents coaxiaux, avantageusement accolés. La rigidité en basculement du palier central 120 est ajustée au besoin de rigidité de l'ensemble. Elle est d'autant plus élevée que la distance entre les points d'intersection C1 et C2 (figure 4) des lignes de force des roulements 30 est élevée et que le diamètre du palier central 120 est important.

La structure portée 110 est asymétrique par rapport à l'axe de rotation principal A. Elle est symétrique par rapport à l'axe de rotation secondaire B.

Les caractéristiques du support 134, ainsi que sa relation avec le tourillon central 132 sont identiques à celles décrites en référence au premier mode de réalisation.

La structure porteuse 107 est symétrique par rapport à l'axe de rotation secondaire B. Elle est asymétrique par rapport à l'axe de rotation principal A. Elle comprend un anneau central 22 logeant le palier central 120, encadré selon la direction de l'axe de rotation principal A par des premier et deuxième tourillons d'extrémité 124, 126. Les premier et deuxième tourillons d'extrémité 124, 126 s'étendent chacun selon une même direction confondue avec l'axe de rotation principal A. En particulier, ils sont chacun sensiblement symétriques par rapport à l'axe de rotation principal A. Comme illustré sur la figure 4, ils s'étendent entre un premier plan P1 et un deuxième plan P2 parallèles entre eux et contenant une direction parallèle à l'axe de rotation principal A.

Comme cela est visible sur la figure 4, la structure porteuse 107 présente une forme de vilebrequin, le palier central 120 étant excentré par rapport aux tourillons d'extrémité 26, 28. Le palier central 120 est espacé de l'axe de rotation principal A selon la direction de l'axe de rotation secondaire B. Il est en particulier décalé par rapport aux tourillons d'extrémité 124, 126 selon la direction de l'axe de rotation secondaire B. Le palier central 120 s'étend ainsi en-dehors de l'espace délimité par les plans P1 et P2.

La structure porteuse 107 délimite, entre les tourillons d'extrémité 124, 126 et au droit du palier central 120, un espace 76 de réception du support 134. Cet espace de réception 76 est symétrique par rapport à l'axe de rotation secondaire B. Le support 134 est reçu au moins en partie dans l'espace de réception 76 entre les tourillons d'extrémités 126, 128. Il est sensiblement symétrique par rapport à l'axe de rotation secondaire B.

L'agencement du palier central 120 par rapport à l'axe de rotation principal A est choisi de telle sorte que la masse en rotation autour de l'axe de rotation principal A, c'est-à-dire la masse de la structure portée 110 et de la structure porteuse 107, ait son centre de gravité au plus près de l'axe de rotation principal A.

En outre, la masse en rotation autour de l'axe de rotation secondaire B, c'est-à-dire la masse de la structure portée 110, a son centre de gravité au plus près de l'axe de rotation secondaire B.

Le tourillon central 132 s'étend selon la direction de l'axe de rotation secondaire B, perpendiculairement au plan moyen de la structure porteuse 107. Dans l'exemple représenté, il s'étend, selon la direction de l'axe de rotation secondaire B, au-delà de l'extrémité du palier central 120 du côté du support 134. A son extrémité libre 73, il s'arrête sensiblement au niveau de l'extrémité du palier central 120 opposée au support 134.

La structure portée 107 ne s'étend partiellement en regard du support 134 qu'au niveau des premier et deuxième tourillons d'extrémité 124, 126, c'est-à-dire sur une partie de deux faces latérales du support 134 du côté de la structure portée 107. Le support 134 est librement accessible par son côté opposé au tourillon 132 selon la direction de l'axe de rotation secondaire B. En particulier, le cadre de support 5 comprend une ouverture 141 d'accès à la charge logée dans le support 134.

L'agencement de l'ensemble d'entraînement dans le palier central 120 est identique à celui décrit en référence au premier mode de réalisation.

La plateforme stabilisée 100 selon le deuxième mode de réalisation de l'invention présente les avantages suivants.

L'utilisation d'un palier unique 120 de guidage en rotation de la structure portée 110 simplifie la conception et la fabrication de la plateforme 100 en évitant d'avoir à aligner plusieurs paliers entre eux. En outre, la réduction du nombre de paliers contribue à la diminution de la masse totale de la plateforme 100.

La forme non englobante de la structure porteuse 107 simplifie la fabrication de cette structure, ainsi que l'assemblage de la plateforme stabilisée. Elle améliore également la rigidité de la structure porteuse 107 réduisant ainsi les risques de déformation de la plateforme. En outre, l'espace disponible pour la charge utile n'est pas limité selon la direction de l'axe de rotation secondaire B par les dimensions d'une structure porteuse englobante. Il est ainsi augmenté par rapport à une plateforme stabilisée à structure porteuse englobante.

A même charge utile transportée, la forme non englobante de la structure porteuse 107 engendre une diminution de la masse totale de la plateforme 100.

L'ouverture 141 prévue dans le cadre de support facilite l'accès à la charge utile, notamment lors de son intégration dans le support 134 ou au cours d'opérations de maintenance.

La forme particulière de la structure porteuse 110 avec le palier central 120 déporté permet d'obtenir une stabilité importante de la plateforme 100, malgré l'asymétrie de la structure portée 107 par rapport à l'axe de rotation principal A résultant en particulier de l'absence du deuxième support 36.

## Revendications

1. Plateforme stabilisée (1 ; 100) comprenant:
- un cadre de support (5);
- une structure porteuse (7 ; 107), montée rotative par rapport au cadre de support (5) autour d'un axe de rotation principal (A) ; et
- une structure portée (10 ; 110), montée rotative par rapport à la structure porteuse (7 ; 107) autour d'un axe de rotation secondaire (B) sensiblement perpendiculaire à l'axe de rotation principal (A),
la structure portée (10 ; 110) comprenant au moins un support (34, 36 ; 134) destiné à recevoir une charge,
la structure porteuse (7 ; 107) comprenant un palier central (20 ; 120),
la structure portée (10 ; 110) étant guidée en rotation autour de l'axe de rotation secondaire (B) par le palier central (20 ; 120), lequel est disposé d'un seul côté du ou de chaque support (34, 36 ; 134) selon l'axe de rotation secondaire (B),
la structure portée (10 ; 110) comprenant un tourillon central (32 ; 132) monté rotatif dans le palier central (20 ; 120), le ou chaque support (34, 36 ; 134) étant disposé à une extrémité respective du tourillon central (32 ; 132) selon la direction de l'axe de rotation secondaire (B), et
la structure porteuse (7 ; 107) comprenant un anneau central (22) logeant le palier central (20 ; 120) et des premier et deuxième tourillons d'extrémité (24, 26 ; 124, 126) encadrant l'anneau central (22) selon la direction de l'axe de rotation principal (A), le cadre de support (5) comprenant un premier et un deuxième palier (12, 14), le premier tourillon d'extrémité (24 ; 124) et le deuxième tourillon d'extrémité (26 ; 126) étant montés rotatifs respectivement dans le premier et le deuxième palier (12, 14),
**caractérisée en ce que** la plateforme stabilisée comprend en outre un premier ensemble d'entraînement, propre à entraîner en rotation la structure portée (10 ; 110), lequel premier ensemble d'entraînement comprend un premier moteur électrique (38), le premier ensemble d'entraînement étant logé dans l'anneau central (22), le premier moteur électrique (38) comprenant un stator (44) et un rotor (42), le stator (44) étant monté fixe par rapport à la structure porteuse (7) et entourant circonférentiellement le rotor (42), le rotor (42) étant solidaire du tourillon central (32) de la structure portée (10), qu'il entraîne en rotation.

2. Plateforme stabilisée (1 ; 100) selon l'une quelconque des revendications précédentes, dans laquelle le cadre de support (5) comprend des premier et deuxième paliers (12, 14 ; 112, 114) de guidage en rotation de la structure porteuse (7 ; 107), les premier et deuxième paliers (12, 14 ; 112, 114) étant montés sur le cadre de support (5) par l'intermédiaire d'un système de suspensions.

3. Plateforme stabilisée (1 ; 100) selon l'une quelconque des revendications précédentes, dans laquelle le premier ensemble d'entraînement comprend en outre un premier capteur de position angulaire (40), le palier central (20 ; 120) étant agencé, selon la direction de l'axe de rotation secondaire (B), entre le premier moteur électrique (38) et le premier capteur de position angulaire (40).

4. Plateforme stabilisée (1 ; 100) selon l'une quelconque des revendications précédentes, dans laquelle le ou chaque support (34, 36 ; 134) est librement accessible.

5. Plateforme stabilisée (1 ; 100) selon l'une quelconque des revendications précédentes, dans laquelle au moins l'un des supports (34, 36 ; 134) est accessible par une ouverture (41 ; 141) prévue dans le cadre de support (5).

6. Plateforme stabilisée (1) selon l'une quelconque des revendications précédentes, dans laquelle la structure portée (7 ; 107) est symétrique par rapport à l'axe de rotation principal (A).

7. Plateforme stabilisée (1) selon l'une quelconque des revendications précédentes, dans laquelle la structure portée (10) comprend deux supports (34, 36) agencés de part et d'autre du palier central (20).

8. Plateforme stabilisée (1) selon la revendication 8, dans laquelle les supports (34, 36) s'étendent de part et d'autre de la structure porteuse (7) selon la direction de l'axe de rotation secondaire (B).

9. Plateforme stabilisée (100) selon l'une quelconque des revendications 1 à 5, dans laquelle la structure portée (110) comprend uniquement un support (134) et dans laquelle le palier central (120) est décalé par rapport à l'axe de rotation principal (A) selon la direction de l'axe de rotation secondaire (B) à l'opposé du support (134).

10. Plateforme stabilisée (100) selon la revendication 10, dans laquelle la structure porteuse (107) délimite un espace de réception du support (134) au droit du palier central (120) selon la direction de l'axe de rotation secondaire (B) et dans laquelle au moins une partie du support (134) s'étend dans cet espace de réception (76).

## Patentansprüche

1. Stabilisierte Plattform (1; 100), bestehend aus:
- einem Stützrahmen (5),
- einer Tragkonstruktion (7; 107), die drehbar in Bezug auf den Stützrahmen (5) um eine Hauptrotationsachse (A) herum montiert ist, und
- eine getragene Konstruktion (10, 110), die drehbar in Bezug auf die Tragkonstruktion (7; 107) um eine zweite Rotationsachse (B) herum montiert ist, die im Wesentlichen senkrecht zur Hauptrotationsachse (A) ist,
wobei die getragene Konstruktion (10; 110) mindestens eine Stütze (34, 36; 134) umfasst, die dazu bestimmt ist, eine Last aufzunehmen,
wobei die Tragkonstruktion (7; 107) ein mittig angeordnetes Lager (20; 120) umfasst, wobei die getragene Konstruktion (10; 110) drehbar rund um die zweite Rotationsachse (B) herum mittels des mittig angeordneten Lagers (20; 120) geführt wird, welches an nur einer Seite der oder jeder Stütze (34, 36; 134) entlang der zweiten Rotationsachse (B) angeordnet ist,
wobei die getragene Konstruktion (10; 110) einen zentrischen Zapfen (32; 132) umfasst, der drehbar im mittig angeordneten Lager (20; 120) montiert ist, wobei die oder jede Stütze (34, 36; 134) an einem jeweiligen Ende des zentrischen Zapfens (32; 132) in Richtung der zweiten Rotationsachse (B) angeordnet ist, und
die Tragkonstruktion (7; 107) einen zentrischen Ring (22) umfasst, der das mittig angeordnete Lager (20; 120) aufnimmt, und erste und zweite Endzapfen (24, 26; 124, 126), die den zentrischen Ring (22) in Richtung der Hauptrotationsachse (A) einrahmen, wobei der Stützrahmen (5) ein erstes und ein zweites Lager (12, 14) umfasst, wobei der erste Endzapfen (24; 124) und der zweite Endzapfen (26; 126) jeweils in dem ersten und in dem zweiten Lager (12, 14) drehbar montiert sind, **dadurch gekennzeichnet, dass** die stabilisierte Plattform außerdem eine erste Antriebseinrichtung umfasst, dazu geeignet, die getragene Konstruktion (10; 110) in Drehung zu versetzen, jene erste Antriebseinrichtung einen ersten elektrischen Motor (38) umfasst, wobei die erste Antriebseinrichtung in dem zentrischen Ring (22) untergebracht ist, wobei der erste elektrische Motor (38) einen Stator (44) und einen Rotor (42) umfasst, wobei der Stator (44) in Bezug auf die Tragkonstruktion (7) fest montiert ist und den Rotor (42) umlaufend umgibt, wobei der Rotor (42) mit dem zentrischen Zapfen (32) der getragenen Konstruktion (10) verbunden ist, die er in Drehung versetzt.

2. Stabilisierte Plattform (1; 100) nach einem der vorstehenden Ansprüche, in welcher der Stützrahmen (5) erste und zweite Lager (12, 14; 112, 114) zur drehbaren Führung der Tragkonstruktion (7; 107) umfasst, wobei die ersten und zweiten Lager (12, 14; 112, 114) mit Hilfe eines Aufhängungssystems auf dem Stützrahmen (5) montiert sind.

3. Stabilisierte Plattform (1; 100) nach einem der vorstehenden Ansprüche, in welcher die erste Antriebseinrichtung außerdem einen ersten Winkelpositionssensor (40) umfasst, wobei das mittig angeordnete Lager (20; 120) in Richtung der zweiten Rotationsachse (B) zwischen dem ersten elektrischen Motor (38) und dem ersten Winkelpositionssensor (40) angeordnet ist.

4. Stabilisierte Plattform (1; 100) nach einem der vorstehenden Ansprüche, in welcher die oder jede Stütze (34, 36; 134) frei zugänglich ist.

5. Stabilisierte Plattform (1; 100) nach einem der vorstehenden Ansprüche, in welcher mindestens eine der Stützen (34, 36; 134) durch eine Öffnung (41; 141) zugänglich ist, die in dem Stützrahmen (5) vorgesehen ist.

6. Stabilisierte Plattform (1) nach einem der vorstehenden Ansprüche, in welcher die getragene Konstruktion (7; 107) symmetrisch in Bezug auf die Hauptrotationsachse (A) ist.

7. Stabilisierte Plattform (1) nach einem der vorstehenden Ansprüche, in welcher die getragene Konstruktion (10) zwei Stützen (34, 36) umfasst, die zu beiden Seiten des mittig angeordneten Lagers (20) angeordnet sind.

8. Stabilisierte Plattform (1) nach Anspruch 7, in welcher die Stützen (34, 36) sich zu beiden Seiten der Tragkonstruktion (7) in Richtung der zweiten Rotationsachse (B) erstrecken.

9. Stabilisierte Plattform (100) nach einem der Ansprüche 1 bis 5, in welcher die getragene Konstruktion (110) einzig eine Stütze (134) umfasst und in welcher das mittig angeordnete Lager (120) in Bezug auf die Hauptrotationsachse (A) in Richtung der zweiten Rotationsachse (B) entgegengesetzt der Stütze (134) versetzt ist.

10. Stabilisierte Plattform (100) nach Anspruch 9, in welcher die Tragkonstruktion (107) einen Raum zur Aufnahme der Stütze (134) direkt an dem mittig angeordneten Lager (120) in Richtung der zweiten Rotationsachse (B) begrenzt, und in welcher mindestens ein Teil der Stütze (134) sich in diesen Raum zur Aufnahme (76) erstreckt.

## Claims

1. Stabilised platform (1; 100) comprising:
• a support frame (5);
• a load-bearing structure (7: 107) mounted to be rotatable in relation to the support frame (5) around a main axis of rotation (A); and
• a supported structure (10; 110) mounted to be rotatable in relation to the load-bearing structure (7; 107) around a secondary axis of rotation (B) substantially perpendicular to the main axis of rotation (A),
wherein the supported structure (10; 110) comprises at least one support (34, 36; 134) intended to receive a load,
the load-bearing structure (7; 107) comprises a central bearing (20; 120),
the supported structure (10; 110) is rotationally guided around the secondary axis of rotation (B) by the central bearing (20; 120), which is arranged on one side of the or each support (34, 36; 134) along the secondary axis of rotation (B),
the supported structure (10; 110) comprises a central journal (32; 132) rotatably mounted in the central bearing (20; 120), wherein the or each support (34, 36; 134) is arranged at a respective end of the central journal (32; 132) in the direction of the secondary axis of rotation (B), and
the load-bearing structure (7; 107) comprises a central ring (22) housing the central bearing (20; 120) and the first and second end journals (24, 26; 124, 126) surrounding the central ring (22) in the direction of the main axis of rotation (A), wherein the support frame (5) comprises a first and a second bearing (12, 14), the first end journal (24; 124) and the second end journal (26; 126) are mounted to be rotatable respectively in the first and the second bearing (12, 14),
**characterised in that** the stabilised platform additionally comprises a first drive assembly suitable for rotationally driving the supported structure (10; 110), which first drive assembly comprises a first electric motor (38), wherein the first drive assembly is housed in the central ring (22), the first electric motor (38) comprises a stator (44) and a rotor (42), the stator (44) is fixedly mounted in relation to the load-bearing structure (7) and surrounds the rotor (42) circumferentially, wherein the rotor (42) is integral to the central journal (32) of the supported structure (10), which it drives rotationally.

2. Stabilised platform (1; 100) according to any one of the preceding claims, in which the support frame (5) comprises first and second bearings (12, 14; 112, 114) for rotational guidance of the load-bearing structure (7; 107), wherein the first and second bearings (12, 14; 112, 114) are mounted on the support frame (5) by means of a suspension system.

3. Stabilised platform (1; 100) according to any one of the preceding claims, in which the first drive assembly additionally comprises a first angular position sensor (40), wherein in the direction of the secondary axis of rotation (B) the central bearing (20; 120) is arranged between the first electric motor (38) and the first angular position sensor (40).

4. Stabilised platform (1; 100) according to any one of the preceding claims, in which the or each support (34, 36; 134) is freely accessible.

5. Stabilised platform (1; 100) according to any one of the preceding claims, in which at least one of the supports (34, 36; 134) is accessible through an opening (41; 141) provided in the support frame (5).

6. Stabilised platform (1) according to any one of the preceding claims, in which the supported structure (7; 107) is symmetrical in relation to the main axis of rotation (A).

7. Stabilised platform (1) according to any one of the preceding claims, in which the supported structure (10) comprises two supports (34, 36) arranged on either side of the central bearing (20).

8. Stabilised platform (1) according to claim 7, in which the supports (34, 36) extend on either side of the load-bearing structure (7) in the direction of the secondary axis of rotation (B).

9. Stabilised platform (100) according to any one of claims 1 to 5, in which the supported structure (110) only comprises one support (134) and in which the central bearing (120) is offset in relation to the main axis of rotation (A) in the direction of the secondary axis of rotation (B) opposite the support (134).

10. Stabilised platform (100) according to claim 9, in which the load-bearing structure (107) delimits a space for receiving the support (134) vertical to the central bearing (120) in the direction of the secondary axis of rotation (B) and in which at least one part of the support (134) extends in this receiving space (76).
